# EUROPÄISCHE PATENTSCHRIFT

(11) **EP 0 630 360 B1**
(45) Veröffentlichungstag und Bekanntmachung des Hinweises auf die Patenterteilung: **26.06.1996**
(21) Anmeldenummer: 93906543.9
(22) Anmeldetag: 18.03.1993
(51) Int. Cl.: C05G 3/00

(54) **MITTEL ZUR FÖRDERUNG UND PFLEGE DES PFLANZENWACHSTUMS UND VERFAHREN ZU IHRER HERSTELLUNG**
AGENT FOR PROMOTING AND MAINTAINING PLANT GROWTH AND PROCESS FOR PREPARING THE SAME
AGENT POUR ACTIVER ET ENTRETENIR LA CROISSANCE VEGETALE ET SON PROCEDE DE PREPARATION

(30) Priorität: 20.03.1992 DE 4209014
(43) Veröffentlichungstag der Anmeldung: 28.12.1994
(73) Patentinhaber: Henkel Kommanditgesellschaft auf Aktien, 40191 Düsseldorf (DE)
(72) Erfinder: KEMPF, Wolfgang, D-4047 Dormagen (DE); SCHRÖDER, Peter, D-4060 Viersen (DE); RITTER, Wolfgang, D-5657 Haan (DE); EBBE, Bernd, D-5657 Haan (DE)
(86) Internationale Anmeldenummer: EP9300646
(87) Internationale Veröffentlichungsnummer: WO9319023

(56) Entgegenhaltungen:
- DE-A- 3 739 088
- US-A- 3 451 800
- DATABASE WPIL, Section Ch, Week 9109, Derwent Publications Ltd., London (GB); Class C04, AN 91-060977

## Beschreibung

Die Erfindung betrifft formgestaltete Düngemittel, die als Pulver, als Granulate, insbesondere aber in Form sogenannter Düngerstäbchen vorliegen können und als wesentliche Komponenten Pflanzennährstoffe zusammen mit einem biologisch verträglichen und abbaubaren thermoplastischen Bindemittel enthalten. Die Erfindung wird im nachfolgenden im wesentlichen an den als Düngerstäbchen ausgestalteten Wertstoffgemischen beschrieben, sie ist aber auf diese Raumform nicht eingeschränkt.

Düngerstäbchen werden im Haus- und Gartenbereich vor allem zum Düngen von Topfpflanzen eingesetzt. Aber auch im Erwerbsgartenbau finden sie Verwendung. Man steckt oder drückt die Düngerstäbchen in die Erde, um den Boden, der die Pflanze umgibt, mit den nötigen Nährstoffen zu versorgen. Auf diese Weise ist eine einfache und exakte Dosierung der Düngermenge möglich. Auch die Freisetzungsrate der Nährstoffe läßt sich durch den Bindemittelanteil gezielt beeinflussen. Andere Anbietungsformen für solche formgestalteten Düngemittel sind Stifte, Nägel oder Keile. Für den großflächigen Austrag von vorbestimmten Nährstoffmischungen mit gezielter Freigaberate können die eingangs erwähnten Anbietungsformen der Pulver und/oder Granulate praktisch einfach zu handhabende Möglichkeiten erschließen.

Zum Stand der Technik wird beispielsweise verwiesen auf die DE-C2-32 29 954, die DE-A1 32 47 917 und die DE-C2 34 05 521, sowie das in diesen Druckschriften genannte zusätzliche einschlägige Material des Standes der Technik.

Düngestäbchen enthalten komplexe Gemische von anorganischen und gegebenenfalls organischen Komponenten, die die für das Pflanzenwachstum nötigen Elemente - je nach Wahl zeitverzögert oder unmittelbar wirksam - liefern können. In Betracht kommen insbesondere die Elemente N, P, K, Ca, Mg, Fe, Mn, Zn, Cu, Mo, B, Co, S und Na. Langsam wirkende Stickstoff-Depotdüngerkomponenten sind beispielsweise ausgewählte organische Stickstoffverbindungen wie Harnstoff-Formaldehyd-Kondensat oder Crotonylidendiharnstoff, schnellwirkend sind demgegenüber Ammonium-, Nitrat- und Amidstickstoffverbindungen. Für die Phosphatversorgung der Pflanzen haben sich wasserlösliche, ammoniumnitratlösliche und mineralsäurelösliche Ammonium-, Kalium-, Magnesium- und Calciumphosphate bewährt. Kalium wird beispielsweise in Form von K₂SO₄ oder KCl verwendet, aber auch Kalium-Magnesiumsulfat ist geeignet. Magnesium kann in Form verschiedener Sulfatsalze zur Verwendung kommen. Geeignete weitere Mischungskomponenten sind beispielsweise Ammoniummolybdat, Zinksulfat sowie Borsäure. Geeignete organische Komponenten, die als Nährstoffe und/oder als Zuschlag- beziehungsweise Füllstoffe Verwendung finden können, sind Torf, Biomassen aus Bakterien oder Pilzen, Harnstoff, Hornspäne, Hornmehl, Blut- und Knochenmehl, Seetangpulver und dergleichen. Wichtige weitere Bestandteile solcher Düngemittel können insbesondere aber auch Pflanzenschutzmittel zur Minderung des unerwünschten Befalls der Pflanzen von Schädlingen und/oder Krankheitserregern sein. Weitere übliche Zuschlagsstoffe in Mitteln der hier betroffenen Art sind beispielsweise Farb- und Geruchsstoffe, Gleitmittel, Urease- und Nitrifikationshemmer sowie ganz einfach Füllstoffe, beispielsweise Sand.

Die komplexen Wirkstoffgemische aus Pflanzennähr- und Pflanzenschutzstoffen werden mit einem üblicherweise wasserlöslichen thermoplastischen Bindemittel innig vermischt und in dieser Form bei erhöhten Temperaturen formgebend, zum Beispiel zu Stäbchen, verarbeitet. Dem Bindemittel kommt nicht nur die Aufgabe der stabilen Formgebung für das komplexe Wertstoffgemisch zu, es kann auch die Freigabecharakteristik der jeweiligen Formkörper im praktischen Einsatz beeinflussen.

Die bisher eingesetzten Bindemittel - vergleiche dazu die eingangs zitierte Literatur und die darin benannte Sekundärliteratur - sind synthetische oder halbsynthetische Polymerverbindungen, wobei in der Praxis besondere Bedeutung zukommt dem Polyethylenglykol, dem Polyvinylpyrrolidon, der Carboxymethylcellulose und insbesondere dem Polyvinylalkohol.

Die Lehre der im nachfolgenden geschilderten Erfindung geht von der Aufgabe aus, in Stoffmischungen der hier beschriebenen Art ein bisher nicht verwendetes Bindemittel einzusetzen. Dieses Bindemittel soll nicht nur billig und in beliebigen Mengen verfügbar sein, es soll alle Vorteile der formgestaltenden Herstellung, insbesondere in der Gestalt der Düngerstäbchen ermöglichen. Die Trockenformen des fertigen handelsfähigen Materials sollen gegenüber Luftzutritt und insbesondere der unter praktischen Bedingungen vorhandenen Luftfeuchte so hinreichend inert sein, daß Behinderungen im praktischen Einsatz beispielsweise durch Klebrigwerden, Veränderung der Festigkeiten und dergleichen, nicht auftreten. Die Erfindung will aber insbesondere ein Bindemittel zur Verfügung stellen, das nicht nur bioverträglich ist, sondern seinerseits auch als zusätzlicher Wertstoff angesprochen werden kann.

Die erfindungsgemäße Lehre geht von der Feststellung aus, daß thermomechanisch aufgeschlossene und auf diese Weise thermoplastifizierte Stärke in der Lage ist, diesen vielgestaltigen Aufgabenkatalog zu erfüllen.

### Gegenstand der Erfindung

Die Erfindung betrifft dementsprechend in einer ersten Ausführungsform formgestaltete Wertstoffgemische zur Förderung und Pflege des Pflanzenwachstums, die Pflanzennähr- und/oder Pflanzenschutzstoffe in Abmischung mit einem thermoplastischen Bindemittel enthalten. Erfindungsgemäß sind die Wertstoffgemische dadurch gekennzeichnet, daß sie als Bindemittel bei erhöhten Drucken und Temperaturen thermomechanisch aufgeschlossene Stärke in Mengen von etwa 10 bis 40 Gew.-% enthalten.

Die Erfindung betrifft in einer weiteren Ausführungsform das Verfahren zur Herstellung dieser formgestalteten Wertstoffgemische, das sich dadurch gekennzeichnet, daß man native Stärke mit den genannten Wertstoffen, gewünschtenfalls weiteren Wasseranteilen und/oder niedermolekularen Plastifizierungsmitteln vermischt, die Mehrstoffmischung bei erhöhten Temperaturen und Drucken unter gleichzeitiger intensiver Vermischung und/oder Verknetung dem Stärkeaufschluß unter Bildung der thermoplastisch verarbeitbaren Stärke unterwirft und gewünschtenfalls das homogenisierte Stoffgemisch formgebend verarbeitet.

Die Erfindung betrifft schließlich die Verwendung einer thermomechanisch aufgeschlossenen Stärke in Mengen von etwa 10 bis 40 Gew.-% , gegebenenfalls in Abmischung mit untergeordneten Mengen weiterer biologisch verträglicher Bindemittelbestandteile, als biologisch abbaubares Bindemittel für Wertstoffgemische zur Förderung und Pflege des Pflanzenwachstums.

### Einzelheiten zur Erfindung

Zahlreiche Vorschläge aus den letzten Jahren beschäftigen sich mit dem Versuch, hochmolekulare Polymerverbindungen natürlichen Ursprungs - und hier insbesondere Stärke - einem erweiterten Bereich möglicher Anwendungsgebiete zu erschließen. Diese Arbeiten bauen auf der Erkenntnis auf, daß native Stärke zusammen mit beschränkten Mengen an Wasser und/oder weiteren Hilfsstoffen durch einen thermomechanischen Aufschluß zum thermoplastischen Material umgewandelt werden kann, dessen Verarbeitung in konventioneller Weise, zum Beispiel durch formgebende Extrusion, möglich ist. Der thermomechanische Aufschluß unter Einsatz erhöhter Temperaturen und Drucke ist dabei insbesondere in konventionellen Extrudern möglich, die dem formgebenden Verarbeitungsschritt vorgeschaltet sind. Aus dem umfangreichen Schrifttum sei hier verwiesen auf die Veröffentlichung R.F.T. Stepto et al. Injection Moulding of Natural Hydrophilic Polymers in the Presence of Water, CHIMIA 41 (1987) Nr. 3, 76 - 81, sowie die dort zitierte Literatur.

Weiterführende Arbeiten - auch der Anmelderin - beschäftigen sich mit der Möglichkeit, andere Polymerverbindungen synthetischen Ursprungs in die thermoplastifizierte Stärke einzuarbeiten, um auf diese Weise bestimmte Stoffeigenschaften - insbesondere eine gezielte Einstellbarkeit der Wasserfestigkeit - zu ermöglichen. Verwiesen wird auf die älteren Anmeldungen der Anmelderin gemäß DE-A 40 38 732 und inbesondere DE-A 41 21 111. Die zuletzt genannte ältere Patentanmeldung beschreibt die Mitverwendung synthetischer thermoplastischer Polymerverbindungen, die wenigstens anteilsweise aus Grundstoffen auf Basis nachwachsender Rohstoffe aufgebaut sind, in Abmischung mit der thermoplastifizierten Stärke. Die Offenbarung der genannten Schutzrechtsanmeldungen der Anmelderin wird hiermit ausdrücklich auch zum Gegenstand der vorliegenden Erfindungsoffenbarung gemacht.

Kern der erfindungsgemäßen Lehre ist der jetzt aufgefundene Sachverhalt, daß thermomechanisch aufgeschlossene und damit thermoplastifizierte Stärke ganz besonders als Bindemittel in Düngerstäbchen der in der eingangs zitierten Vorliteratur beschriebenen Art und entsprechenden mehr oder weniger feinteiligen festen Angebotsformen für solche Wertstoffgemische zur Förderung und zum Schutz des Pflanzenwachstums geeignet ist.

Die thermoplastifizierte Stärke ist nicht nur ein Wertstoff der - ausgehend von nativer Stärke - in unbegrenzter Menge billig zur Verfügung steht, in Abmischung mit den erfindungsgemäß betroffenen Stoffgemischen anorganischer und organischer Natur erweist sich die thermoplastifizierte Stärke als ein Bindemittel, das den Anforderungen bei der Herstellung, bei der Lagerung und beim Einsatz der formgestalteten Düngergemische optimal entspricht. Beschränkte Mengen der thermoplastifizierten Stärke reichen aus, Düngerstäbchen üblicher Zusammensetzung mit hoher Festigkeit auszubilden. Die erfindungsgemäßen Düngerstäbchen sind gegenüber dem Zutritt von Luft und der damit verbundenen Luftfeuchte praktisch inert. Auch bei offener Lagerung für längere Zeit an der Luft wird die Oberfläche des Düngerstäbchens nicht klebrig. Die eingestellte Festigkeit des Stäbchens verändert sich nicht. Wird andererseits das Düngerstäbchen in das feuchte Erdreich gedrückt, verändern sich die Verhältnisse bezüglich des mit dem Erdreich in Kontakt stehenden Anteiles des Düngerstäbchens rasch. Der vom feuchten Erdreich umhüllte Anteil des Düngerstäbchens wird erweicht, aufgeschlossen, die düngenden und/oder den Pflanzenschutz bewirkenden Wertstoffe werden freigesetzt und können ihre Funktion entfalten. Entscheidend sind dabei unter anderem die folgenden Sachverhalte: Der noch im Freien befindliche Düngerstäbchenanteil bleibt in seiner Festigkeit praktisch unverändert erhalten, er kann also im Ausmaß des Bedarfes stufenweise mehr und mehr in den Pflanzboden gedrückt werden. Der im Boden befindliche Stärkeanteil ist als Naturstoff dem bodeneigenen und pflanzeneigenen Stoffwechsel zugänglich und wird damit selber zum Wertstoff. Durch die spezielle Ausgestaltung des thermomechanischen Aufschlußverfahrens für die Stärke kann substantiell Einfluß genommen werden auf die Beschaffenheit der thermoplastifizierten Stärke, beispielsweise im Sinne einer spröderen oder einer festeren Grundstruktur des Mehrkomponentenmaterials. Damit kann beispielsweise Einfluß genommen werden auf eine eventuell gewünschte sekundäre Verarbeitbarkeit der primären Formkörper. Verständlich wird das aus folgendem: Sind die erfindungsgemäßen Wertstoffgemische für den breitflächigen Austrag als Pulver und/oder Granulate vorgesehen, dann läßt sich durch Vermahlen oder Zerkleinern der primär gewonnenen Extrudate im Trocken- beziehungsweise Kaltzustand die jeweils angestrebte Anbietungsform leichter einstellen als bei einer Zerkleinerung eines auf Düngestäbchenqualität eingestellten Stoffgemisches im Sinne der Erfindung. Die Modifizierbarkeit der Stoffeigenschaften in der thermomechanisch aufgeschlossenen Stärke und gegebenenfalls die bereits erwähnte Mitverwendung weiterer Bindemittelkomponenten schafft die Möglichkeit, Einfluß auf eine gezielte zeitliche Freigabe der das Pflanzenwachstum beeinflussenden Wertstoffe zu nehmen.

Die Herstellung der thermoplastifizierten Stärke durch thermomechanischen Aufschluß erfolgt in der in den genannten älteren Anmeldungen der Anmelderin geschilderten Weise, wobei dort wiederum auf den einschlägigen Stand der Technik - beispielsweise auf die eingangs zitierte Veröffentlichung R.F.T. Stepto et al. - Bezug genommen wird. Die Stärke wird dementsprechend unter Mitverwendung beschränkter Mengen von Wasser und/oder niedermolekularen Plastifizierungsmitteln durch Verarbeitung bei erhöhten Temperaturen und Drucken thermoplastifiziert. Für die Zwecke der Erfindung erübrigt sich normalerweise ein Zusatz von Fremdwasser. Der Eigenwassergehalt von Stärke liegt bekanntlich im Bereich von etwa 15 bis 20 Gew.-%. Auch für den erfindungsgemäßen Einsatzzweck reicht dieser Wassergehalt aus. Dabei ist es allerdings zweckmäßig, zusätzlich Plastifizierungsmittel der vorbeschriebenen Art einzusetzen. In Betracht kommen für die erfindungsgemäße Arbeitsweise insbesondere biologisch verträgliche Plastifizierungsmittel der genannten Art, hier kommt in erster Linie die Klasse der niederen polyfunktionellen Alkohole und/oder deren Ether in Betracht. Ein besonders geeignetes Plastifizierungsmittel - sowohl aus Überlegungen zur technischen Funktionalität als aus Überlegungen seiner Verträglichkeit im praktischen Einsatz im Boden - ist das Glycerin.

Die erfindungsgemäß beschriebenen Mehrstoffgemische, insbesondere die Düngerstäbchen, enthalten die thermomechanisch aufgeschlossene Stärke üblicherweise in Mengen von etwa 10 bis 40 Gew.-% und vorzugsweise in Mengen von etwa 15 bis 30 Gew.-% - Gew.-% dabei jeweils bezogen auf das Gesamtgewicht des mehrkomponentigen Materials. Zum Rest liegen die üblichen pflanzenwirksamen Wirkstoffe beziehungsweise Wirkstoffgemische gegebenenfalls in Abmischung mit Hilfsstoffen wie Füllstoffen, Gleitmitteln, Farb- und/oder Geruchsstoffen und dergleichen vor. Auf den einschlägigen druckschriftlichen Stand der Technik und insbesondere auf die eingangs genannten deutschen Patentschriften zum Gebiet der Düngerstäbchen wird ausdrücklich verwiesen.

Als Düngerstäbchen können die erfindungsgemäß ausgebildeten formgestalteten Materialien beispielsweise Durchmesser im Bereich von etwa 2 bis 20 mm aufweisen, während ihre Länge üblicherweise im Bereich von etwa 20 bis 200 mm liegt. Für den Einsatz als Düngerstäbchen werden Arbeitsbedingungen bei der Herstellung des formgestalteten Materials bevorzugt, die zu vergleichsweise hohen Biegefestigkeiten des Feststoffmaterials führen. Geeignete Biegefestigkeiten liegen beispielsweise bei wenigstens etwa 3.000 N/cm², sie können dabei aber auch deutlich höher liegen. Im Bereich der Pulver und/oder Granulate können niedrigere Festigkeiten geeignet sein.

Das Herstellungsverfahren der erfindungsgemäßen Formkörper kennzeichnet sich in seiner bevorzugten Ausführungsform durch die Zusammenfassung der beiden Teilschritte Stoffvermischung einerseits und andererseits thermomechanischer Stärkeaufschluß zu einem integrierten Arbeitsschritt. Hierzu werden die native Stärke, die zum Stärkeaufschluß benötigten weiteren Hilfsmittel, insbesondere die niedermolekularen Plastifizierungsmittel und die in das Fertigprodukt einzubringenden Pflanzennähr- und Schutzstoffe getrennt voneinander oder gewünschtenfalls in Teilmischung miteinander in eine geeignete Misch- und Verarbeitungsvorrichtung gegeben. Geeignet sind insbesondere Vorrichtungen, wie sie in der Literatur für den thermoplastischen Aufschluß von Stärke mit Wasser und/oder niederen organischen Hilfskomponenten vorbeschrieben sind. Der Misch- und Stärkeaufschlußschritt wird dementsprechend in geschlossenen Knetern oder vorzugsweise in Extrudern durchgeführt. Dabei werden die Verweilzeit und die Verarbeitungsbedingungen derart aufeinander abgestimmt, daß sowohl der thermomechanische Stärkeaufschluß wie die angestrebte homogene Vermischung aller Komponenten sichergestellt sind.

Die einzelnen Mischungskomponenten können der jeweils eingesetzten Arbeitsvorrichtung, beispielsweise also dem Extruder, im Einzugsbereich kontinuierlich in der jeweils benötigten Menge zugeführt werden. Bei dem Transport des Mehrkomponentengemisches im Extruder findet in den vorderen Abteilungen insbesondere der angestrebte Homogenisierungs- und Vermischungsvorgang statt. Es schließt sich eine Verarbeitungsstrecke an, die unter Produkttemperaturen und -drucken gehalten wird, die zu dem angestrebten thermomechanischen Stärkeaufschluß führen. Hier liegen die Produkttemperaturen üblicherweise bei wenigstens etwa 90°C und vorzugsweise innerhalb des Bereiches von etwa 90 bis 120°C. Gewünschtenfalls und in Abstimmung mit den insgesamt eingesetzten Mischungskomponenten können auch höhere Arbeitstemperaturen hier zum Einsatz kommen. Voraussetzung ist, daß durch diese thermische Einwirkung keine oder keine wesentliche Schädigung der Wertstoffe zur Förderung beziehungsweise zum Schutz des Pflanzenwachstums ausgelöst wird. Der sich einstellende Arbeitsdruck entspricht üblicherweise dem Eigendruck des wasserhaltigen Stoffgemisches bei der vorgegebenen Arbeitstemperatur, kann aber durch den Betrieb des Extruders in an sich bekannter Weise gesteuert werden. Geeignete Extruder sind Einschneckengeräte oder bevorzugt Mehrschneckengeräte, wie es auch im Stand der Technik zur Herstellung der bisher bekannten Düngerstäbchen beschrieben wird.

Die Verweilzeiten des Mehrstoffgemisches unter den Arbeitsbedingungen betragen im allgemeinen nicht mehr als höchstens etwa 30 Minuten, vorzugsweise liegen sie deutlich darunter. Es kann zweckmäßig sein, mit Verweilzeiten des Mehrstoffgemisches wenigstens im Bereich der Temperatur- und Druckbedingungen zum Stärkeaufschluß von etwa 0,5 bis 10 Minuten und vorzugsweise im Bereich bis etwa 5 Minuten zu arbeiten.

Die im Verfahren einzusetzende Stärke kann beliebigen Ursprungs sein. Stärkelieferanten wie Kartoffeln, Mais, Reis, die üblichen Getreidesorten und dergleichen sind hier in erster Linie zu nennen. Die Stärke wird im allgemeinen in Pulverform eingesetzt. Sie kann gewünschtenfalls Vorbehandlungen unterworfen werden, wie einer Partialtrocknung, einer Säurewäsche und/oder weiteren Vorbehandlungen zur insbesondere physikalischen Modifizierung der Stärke. In der Regel ist das allerdings für das erfindungsgemäße Arbeitsgebiet nicht erforderlich. Der Wassergehalt des insbesondere natürlichen Stärkeeinsatzmaterials kann dabei in einem weiten Bereich schwanken und liegt häufig im Bereich von etwa 10 bis 25 Gew.-%.

Der thermomechanische Aufschluß der Stärke wird in an sich bekannter Weise durch die Mitverwendung von niederen organischen Weichmachern substantiell gefördert. In Betracht kommen hier insbesondere aus dem Bereich der niederen polyfunktionellen Alkohole Verbindungen wie Ethylenglykol, Propylenglykol, Butandiol, insbesondere aber das bereits benannte Glycerin.

Die niedermolekularen Plastifizierungsmittel werden zweckmäßigerweise in Mengen von etwa 5 bis 30 Gew.-% und vorzugsweise in Mengen von etwa 15 bis 30 Gew.-%, eingesetzt - Gew.-% hier bezogen auf die wasserhaltige Stärke. Es ist weiterhin bevorzugt, daß der Gesamtgehalt an Wasser und niederen organischen Plastifizierungsmitteln im Bereich von etwa 25 bis 55 Gew.-% und vorzugsweise im Bereich von etwa 35 bis 50 Gew.-% gewählt wird, wobei diese Gew.-%-Angaben bezogen sind auf die Summe von wasserfreier Stärke, Wasser und niederem Plastifizierungsmittel. Wie zuvor bereits angegeben, machen die Füllstoffe zur Förderung und zum Schutz des Pflanzenwachstums mehr als die Hälfte des Gesamtgewichtes im Düngemittelstäbchen aus, üblicherweise beträgt der Gehalt dieser Komponenten wenigstens etwa 60 Gew.-% und insbesondere etwa 70 bis 80 Gew.-%.

Wird die Mitverwendung von weiteren Bindemitteln neben der thermoplastifizierten Stärke gewünscht, so eignen sich grundsätzlich alle den Einsatzzweck des Materials nicht gefährdenden Hilfsstoffe, insbesondere entsprechende Polymerverbindungen. Besonders zweckmäßig kann die Verwendung von naturstoffbasierten Polymerkomponenten, beispielsweise im Sinne der bereits genannten Anmeldung der Anmelderin DE-A 41 21 111 sein. Hier werden als polymere Mischungskomponenten synthetische Thermoplasten aus der Klasse von Polyestern und/oder Polyamiden beschrieben, die wenigstens anteilsweise aus Grundstoffen auf Basis nachwachsender Rohstoffe aufgebaut sind.

Die Oberflächenbeschaffenheit der erfindungsgemäß hergestellten Düngerstäbchen - glatte, rauhe oder poröse Oberfläche - läßt sich durch die bei der Extrusion eingehaltenden Verfahrensparameter in die jeweils gewünschte Richtung lenken. Insbesondere kann dabei die Oberflächenbeschaffenheit durch die Temperatur und den Arbeitsdruck im Extruder gesteuert werden.

Interessanterweise wurde gefunden, daß selbst Düngemittelrezepturen mit einem Gehalt an starken Oxydationsmitteln - beispielsweise KNO₃ - unter den erfindungsgemäß definierten Arbeitsbedingungen zersetzungsstabil in die Düngerstäbchen eingearbeitet werden können.

Die nachfolgenden Beispiele schildern in Beispiel 1 in ausführlicher Darstellung die Vermischung der Wertstoffe und ihre Verarbeitung unter gleichzeitiger Thermoplastifizierung in einem Schneckenextruder.

Nach den Angaben dieses Beispiels werden weitere Rezepturen im erfindungsgemäßen Sinne gefahren. Ihre Ergebnisse sind als Beispiele 2 bis 13 tabellarisch zusammengefaßt. Es schließt sich ein Vergleichsbeispiel 14 in dieser Tabelle an, bei dem ohne Stärkezusatz gearbeitet worden ist.

### Beispiele

### Beispiel 1

### System Kartoffelstärke/Glycerin

Der Herstellug eines Düngestäbchens aus thermoplastischer Stärke und einer Düngermischung erfolgt durch die Coextrusion von 9 kg/h einer Mischung aus Dünger und Kartoffelstärke (Verhältnis 7:2) und mit 1 kg/h Glycerin in einem Extruder folgende Auslegung:

| | |
|---|---|
| Extruder: | Werner & Pfleiderer; Continua |
| | 37 |
| Arbeitsweise: | gleichläufiger |
| | Zweischneckenextruder |
| Schneckendurchmesser: | 37 mm |
| Länge: | 30 D |
| Drehmoment je Welle: | 90 Nm |
| Antriebsleistung: | 9,5 kW |

In eine nicht beheizte Einzugszone werden die feste und flüssige Komponente ungemischt und an verschiedenen Stellen zudosiert. Zunächst erfolgt die Zudosierung der festen, pulverförmigen Kartoffelstärke/Dünger-Mischung über eine Dosierschnecke. Kurz dahinter (1 D) erfolgt die Zudosierung des Glycerins mit Hilfe einer Exzenterschneckenpumpe von oben in den Extruder.

Die anschließende Mischstrecke sorgt für eine homogene Durchmischung der festen und flüssigen Phase. Um parallel eine Aufheizung der Mischung zu erzielen, wird der Extruder auf der Länge 5 D bis 12 D extern beheizt (Heizmedium-Temperaur: 88°C). In der zweiten Hälfte des Extruders erfolgt ein thermomechanischer Aufschluß der Stärke durch das Glycerin sowie das Wasser der Stärke, der zu einer Plastifizierung des Materials führt. Parallel findet eine Durchmischung der in der geschmolzenen Form vorliegenden, thermoplastischen Stärke mit dem Dünger statt.

Der Energieeintrag erfolgt sowohl durch externe Beheizung als auch durch die intensive mechanische Bearbeitung durch die Knetelemente. Auf der Länge 13 D bis 25 D beträgt die Heizmedium-Temperatur 92°C. Das thermoplastische Material wird durch die Lochplatte mit 10 Löchern a 5 mm Durchmesser gedrückt, wodurch das Material in Form von flexiblen Strängen erhältlich ist. Die Stränge werden auf einem Kühlband oder an Luft gekühlt und anschließend in ca. 5 cm lange Stücke geschnitten.

Die erste Hälte der Schnecke enthielt neben normalen Förderelementen 2 linksgängige Rückmischelemente a 10 mm Länge. Der 2. Teil der Schneckenkonfiguration enthielt neben normalen Förderelementen 2 Knetelemente a 40 mm Länge. Die letzten 4 D der Schnecken waren aus Förderelementen mit erhöhter Steigung aufgebaut, um vor der Lochplatte höhere Drücke zu erzeugen. Gleichzeitig bestand an dieser Stelle die Möglichkeit zur Entgasung.

Die am Extruder einzustellenden Verfahrensparameter, die sich daraus ergebenden Meßgrößen und die Rohstoffzusammensetzung sind aus der nachfolgenden Zusammenstellung ersichtlich:

### Extrudatherstellung

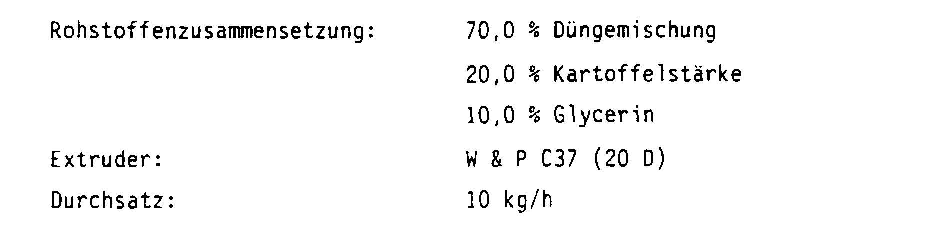

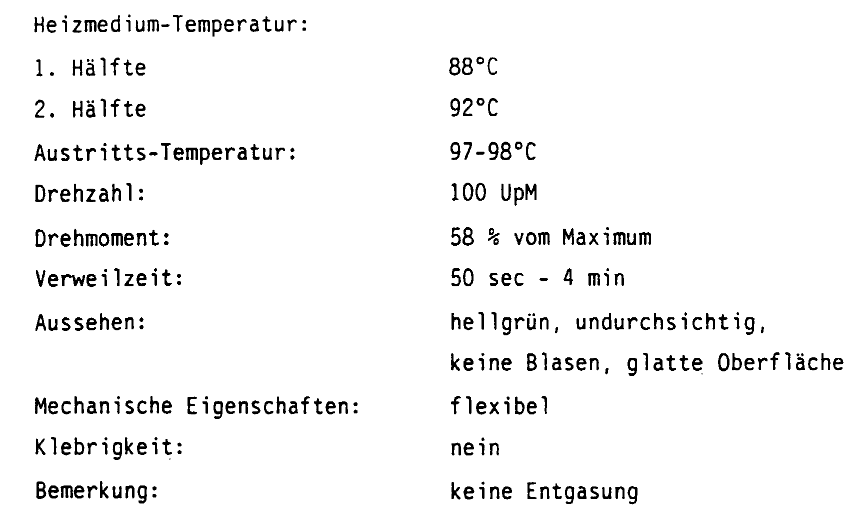

Eine typische Düngermischung ist wie folgt zusammengesetzt:

| | |
|---|---|
| 20 % | Harnstoff-Formaldehydkondensat |
| 15 % | K-Nitrat |
| 15 % | Kaliumsulfat |
| 18 % | Ammoniumsulfat |
| 14 % | Ammoniumdihydrogenphosphat |
| 8 % | Dicalciumphosphat |
| 5 % | Magnesiumsulfat |
| 0,37 % | Borsäure |
| 0,01 % | Ammoniummolybdat |
| 0,32 % | Mangansulfat |
| 0,5 % | EDTA-Fe |
| 0,25 % | EDTA-Cu |
| 0,06 % | Zinksulfat |
| 3,49 % | Kalksteinmehl |
| 100 % | |

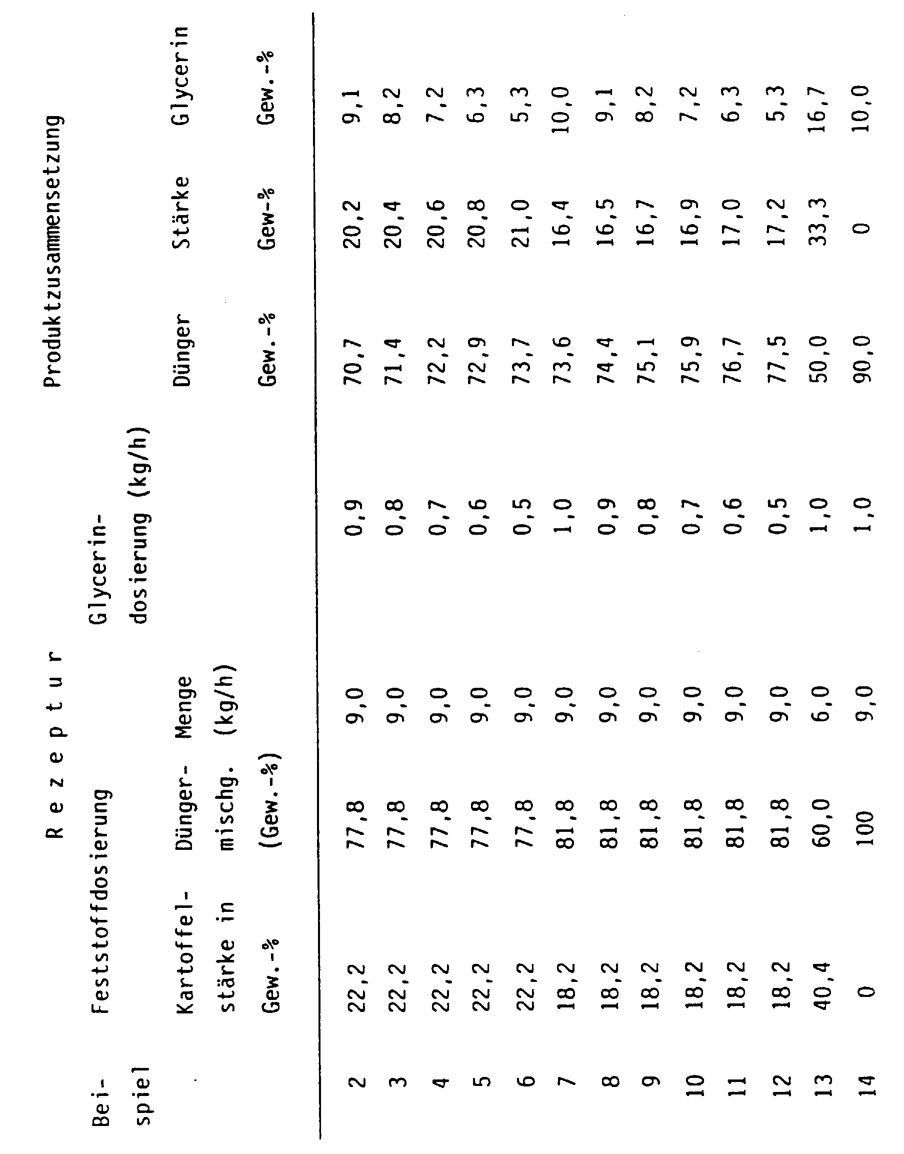

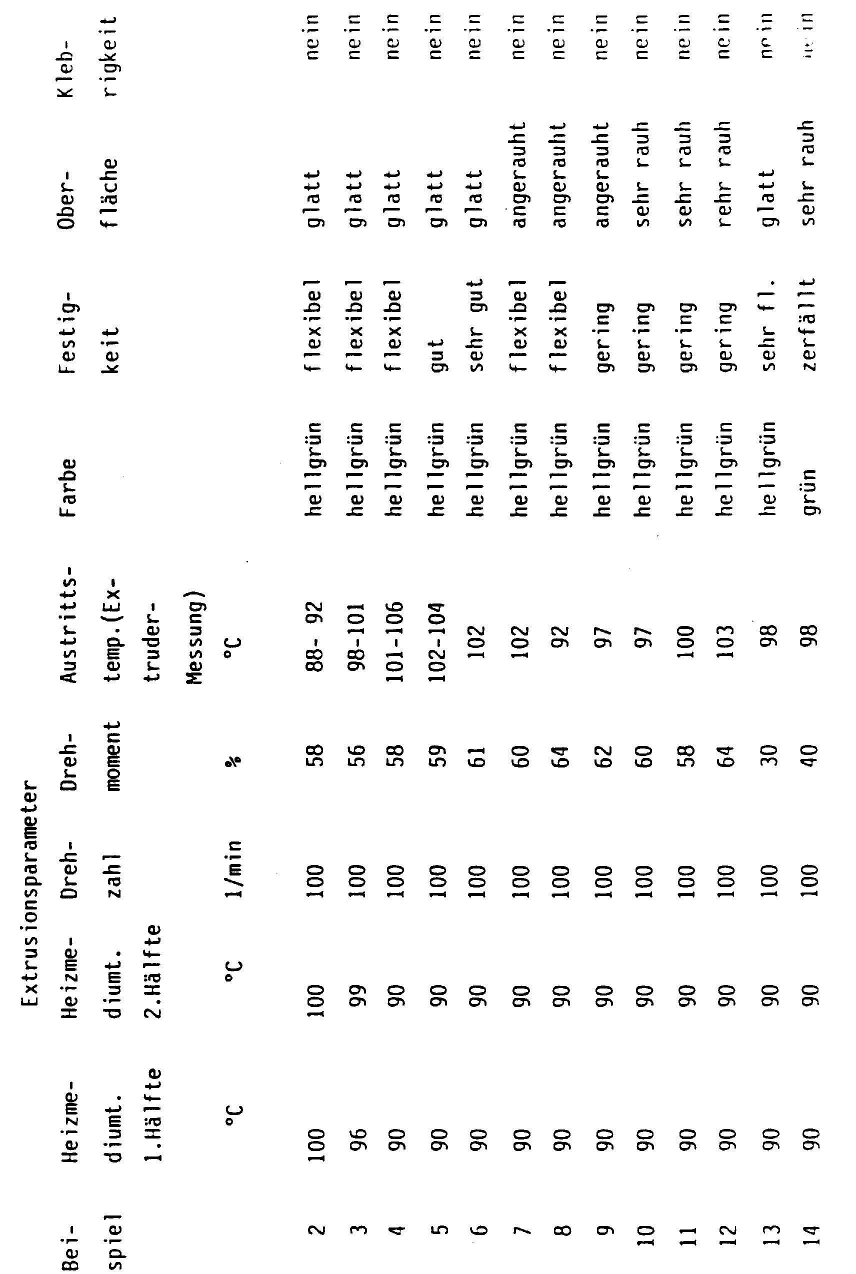

## Patentansprüche

1. Formgestaltete Wertstoffgemische zur Förderung und Pflege des Pflanzenwachstums, die Pflanzennähr- und/oder Pflanzenschutzstoffe in Abmischung mit einem thermoplastischen Bindemittel enthalten, dadurch gekennzeichnet, daß sie als Bindemittel bei erhöhten Temperaturen und Drucken thermomechanisch aufgeschlossene Stärke in Mengen von etwa 10 bis 40 Gew.-%, enthalten.

2. Wertstoffgemische nach Anspruch 1, dadurch gekennzeichnet, daß die Stärke unter Mitverwendung beschränkter Mengen von Wasser und/oder niedermolekularer Plastifizierungsmittel, insbesondere biologisch verträglicher niederer polyfunktioneller Alkohole, thermoplastifiziert worden ist.

3. Wertstoffgemische nach Ansprüchen 1 und 2, dadurch gekennzeichnet, daß sie die thermomechanisch aufgeschlossene Stärke in Mengen von etwa 15 bis 30 Gew.-% - Gew.-% bezogen jeweils auf Gesamtgewicht - und zum Rest die pflanzenwirksamen Wirkstoffe beziehungsweise Wirkstoffgemische, gegebenenfalls in Abmischung mit Hilfsstoffen wie Füllstoffen, Gleitmitteln und/oder Farb- und/oder Geruchsstoffen, enthalten.

4. Wertstoffgemische nach Ansprüchen 1 bis 3, dadurch gekennzeichnet, daß sie als formgestaltetes inniges Feststoffgemisch vorliegen und dabei als Pulver, als Granulat, insbesondere aber in der Form von Düngerstäbchen ausgebildet sind.

5. Wertstoffgemische nach Ansprüchen 1 bis 4, dadurch gekennzeichnet, daß sie gegenüber dem Zutritt von Umgebungsluft wenigstens weitgehend formstabil und klebfrei sind, beim Erdkontakt und insbesondere beim Einbetten in den Pflanzboden die pflanzenwirksamen Wertstoffe jedoch bevorzugt unter gleichzeitigem Stärkeabbau freigeben.

6. Wertstoffgemische nach Ansprüchen 1 bis 5, dadurch gekennzeichnet, daß sie durch Vermischen der Inhaltsstoffe und an sich bekannte Thermoplastifizierung der wasserhaltigen Stärke unter Zusatz geringer Mengen an biologisch verträglichen Plastifizierungsmitteln, insbesondere Glycerin, und anschließende Formgebung hergestellt worden sind.

7. Wertstoffgemische nach Ansprüchen 1 bis 6, dadurch gekennzeichnet, daß sie als Düngerstäbchen für den Haus- und Gartenbereich aber auch für den Erwerbsgartenbau ausgebildet sind und dabei bevorzugt Durchmesser im Bereich von etwa 2 bis 20 mm und eine Länge im Bereich von etwa 20 bis 200 mm, aufweisen.

8. Wertstoffgemische nach Ansprüchen 1 bis 7, dadurch gekennzeichnet, daß sie bei der Ausgestaltung als Düngerstäbchen vergleichsweise hohe Biegefestigkeiten aufweisen, die zum Beispiel bei wenigstens 3.000 N/cm² liegen, während im Bereich der Pulver und/oder Granulate auch niedrigere Festigkeiten gegeben sein können.

9. Verfahren zur Herstellung der formgestalteten Wertstoffgemische zur Förderung des Pflanzenwuchses nach Ansprüchen 1 bis 8, dadurch gekennzeichnet, daß man native Stärke mit den pflanzenwirksamen Wert- und gegebenenfalls Füllstoffen, gewünschtenfalls weiteren Wasseranteilen sowie den niedermolekularen Plastifizierungsmitteln vermischt, die Mehrstoffmischung bei erhöhten Temperaturen und Drucken unter gleichzeitiger intensiver Vermischung und/oder Verknetung dem Stärkeaufschluß unter Bildung der thermoplastisch verarbeitbaren Stärke unterwirft und gewünschtenfalls das homogenisierte Stoffgemisch formgebend verarbeitet.

10. Verfahren nach Anspruch 9, dadurch gekennzeichnet, daß man den Mischvorgang und den Stärkeaufschluß in geschlossenen Knetern oder vorzugsweise in Extrudern durchführt und dabei die Verweilzeit und die Verarbeitungsbedingungen derart aufeinander abstimmt, daß sowohl der thermomechanische Stärkeaufschluß wie eine homogene Einmischung der Wert- und gegebenenfalls Füllstoffe sichergestellt sind.

11. Verfahren nach Ansprüchen 9 und 10, dadurch gekennzeichnet, daß man mit Produkttemperaturen oberhalb 90°C und vorzugsweise im Bereich von etwa 95 bis 120°C wenigstens in den Endphasen des Misch- und Stärkeaufschlußverfahrens arbeitet.

12. Verfahren nach Ansprüchen 9 bis 11, dadurch gekennzeichnet, daß man mit Verweilzeiten des Mehrstoffgemisches unter Arbeitsbedingungen im Bereich bis etwa 30 Minuten, vorzugsweise im Bereich von etwa 0,5 bis 10 Minuten und dabei insbesondere im kontinuierlichen Verfahren und unter dem sich bei der Verfahrenstemperatur im System einstellenden Eigendruck arbeitet.

13. Verfahren nach Ansprüchen 9 bis 12, dadurch gekennzeichnet, daß Mischung und der Stärkeaufschluß in beheizten Extrudern durchgeführt wird, denen die Stärke - vorzugsweise als Stärkepulver mit natürlichem Wassergehalt - und die Wert- beziehungsweise Füllstoffe als getrennte Feststoffe oder auch als Mischung zugeführt werden, während die niedermolekularen Plastifizierungsmittel und/oder zusätzliche Wasseranteile zweckmäßigerweise als getrennter Stoffstrom im Einzugsteil zugegeben werden und daß die homogenisierte und aufgeschlossene Stoffmischung - gewünschtenfalls nach einer partiellen Abtreibung von Überschußwasser - als Extrudat gewonnen wird.

14. Verfahren nach Ansprüchen 9 bis 13, dadurch gekennzeichnet, daß man die Festigkeit und/oder Sprödigkeit des Trockenproduktes durch die Mengen an eingesetzter Stärke und/oder der mitverwendeten Plastifizierungsmittel (Wasser und/oder organische Plastifizierungsmittel) regelt.

15. Verfahren nach Ansprüchen 9 bis 14, dadurch gekennzeichnet, daß die niedermolekularen Plastifizierungsmittel in Mengen von etwa 5 bis 30 Gew.-%, vorzugsweise in Mengen von etwa 15 bis 30 Gew.-% - Gew.-% bezogen auf wasserhaltige Stärke - eingesetzt werden, wobei weiterhin bevorzugt der Gesamtgehalt an Wasser und Plastifizierungsmittel im Bereich von etwa 25 bis 55 Gew.-%, vorzugsweise etwa 35 bis 50 Gew.-% - Gew.-% hier bezogen auf die Summe von Stärke, Wasser und niedermolekularem Plastifizierungsmittel - gewählt wird.

16. Verwendung von thermomechanisch aufgeschlossener Stärke in Mengen von etwa 10 bis 40 Gew.-%, gegebenenfalls in Abmischung mit untergeordneten Mengen weiterer biologisch verträglichen Bindemittelbestandteile als biologisch abbaubares Bindemittel für Wertstoffgemische zur Förderung und Pflege des Pflanzenwachstums.

## Claims

1. Moulded mixtures of useful materials for promoting and sustaining plant growth which contain plant nutrients and/or plant protection agents in the form of a mixture with a thermoplastic binder, characterized in that they contain starch thermomechanically digested at elevated temperatures and pressures in quantities of around 10 to 40% by weight as the binder.

2. Mixtures as claimed in claim 1, characterized in that the starch has been thermoplasticized using limited quantities of water and/or low molecular weight plasticizers, more especially biologically compatible lower polyhydric alcohols.

3. Mixtures as claimed in claims 1 and 2, characterized in that they contain the thermomechanically digested starch in quantities of around 15 to 30% by weight, based on the weight of the mixture as a whole, and for the rest the plant-active ingredients or mixtures thereof, optionally in admixture with auxiliaries, such as fillers, lubricants and/or dyes and/or fragrances.

4. Mixtures as claimed in claims 1 to 3, characterized in that they are present in the form of a moulded intimate mixture of solids and are made up as powders, granules but especially in the form of fertilizer rodlets.

5. Mixtures as claimed in claims 1 to 4, characterized in that they are largely dimensionally stable and tack-free in the presence of air, but release their plant-active ingredients on contact with soil and especially when embedded in the plant soil, preferably with simultaneous degradation of the starch.

6. Mixtures as claimed in claims 1 to 5, characterized in that they have been produced by mixing of the ingredients and thermoplasticization - known per se - of the water-containing starch with addition of small quantities of biologically safe plasticizers, more especially glycerol, and subsequent moulding.

7. Mixtures as claimed in claims 1 to 6, characterized in that they are in the form of fertilizer rodlets for the home and garden and also for nurseries and preferably have diameters of around 2 to 20 mm and a length of around 20 to 200 mm.

8. Mixtures as claimed in claims 1 to 7, characterized in that, in the form of fertilizer rodlets, they have comparatively high flexural strengths, for example of at least 3,000 N/cm², whereas in the form of powders and/or granules they may have lower strength values.

9. A process for the production of the moulded mixtures of useful materials for promoting plant growth claimed in claims 1 to 8, characterized in that native starch is mixed with the plant-active ingredients and optionally fillers, if desired more water and the low molecular weight plasticizers, the multicomponent mixture is subjected to the starch digestion process at elevated temperature and pressure and, at the same time, intensively mixed and/or kneaded to form the thermoplastically processable starch and, if desired, the homogenized mixture is moulded.

10. A process as claimed in claim 9, characterized in that the mixing process and digestion of the starch are carried out in closed kneaders or preferably in extruders, the residence time and the processing conditions being co-ordinated in such a way that both thermomechanical digestion of the starch and homogeneous incorporation of the useful materials and optionally fillers are guaranteed.

11. A process as claimed in claims 9 and 10, characterized in that it is carried out at product temperatures above 90°C and preferably in the range from about 95 to 120°C, at least in the final stages of the mixing and starch digestion process.

12. A process as claimed in claims 9 to 11, characterized in that it is carried out, more especially continuously, with residence times of the multicomponent mixture under working conditions of up to about 30 minutes and preferably in the range from about 0.5 to 10 minutes and under the pressure spontaneously established in the system at the process temperature.

13. A process as claimed in claims 9 to 12, characterized in that mixing and the starch digestion process are carried out in heated extruders to which the starch - preferably in the form of starch powder with a natural water content - and the useful materials and fillers are fed as separate solids or even in the form of a mixture while the low molecular weight plasticizers and/or additional water are best added as a separate stream in the feed section and in that the homogenized and digested mixture is obtained in the form of an extrudate, if desired after the partial removal of excess water.

14. A process as claimed in claims 9 to 13, characterized in that the strength and/or brittleness of the dry product are controlled by the quantities of starch and/or plasticizers (water and/or organic plasticizers) added.

15. A process as claimed in claims 9 to 14, characterized in that the low molecular weight plasticizers are used in quantities of about 5 to 30% by weight and preferably in quantities of about 15 to 30% by weight, based on water-containing starch, the total content of water and plasticizers preferably being in the range from about 25 to 55% by weight and more preferably in the range from about 35 to 50% by weight, based on the sum total of starch, water and low molecular weight plasticizer.

16. The use of thermomechanically digested starch in quantities of about 10 to 40% by weight, optionally in admixture with small quantities of other biologically safe binder constituents, as a biodegradable binder for mixtures of useful materials for promoting and sustaining plant growth.

## Revendications

1. Mélanges de substances de valeur conformés pour favoriser et entretenir la croissance des plantes, qui renferment des substances nutritives pour plantes et/ou des substances protectrices pour plantes, en mélange avec un agent liant thermoplastique, caractérisés en ce qu'ils contiennent comme agent liant un amidon désintégré thermomécaniquement à des températures et à des pressions élevées, en quantités d'environ 10 à 40 % en poids.

2. Mélanges de substances de valeur selon la revendication 1, caractérisés en ce que l'amidon a été thermoplastifié en utilisant conjointement des quantités limitées d'eau et/ou d'agent de plastification à bas poids moléculaire, en particulier des alcools polyfonctionnels inférieurs, compatibles biologiquement.

3. Mélanges de substances de valeur selon les revendications 1 et 2, caractérisés en ce qu'ils renferment l'amidon désintégré thermomécaniquement en quantités d'environ 15 à 30 % en poids rapporté à chaque fois au poids total, et pour le restant les principes actifs efficaces sur les plantes ou les mélanges de principes actifs, le cas échéant en mélange avec des substances auxiliaires comme des charges, des agents de glissement et/ou des colorants et/ou des aromates.

4. Mélanges de substances de valeur selon les revendications 1 à 3, caractérisés en ce qu'ils se présentent sous forme de mélanges de substances solides intimes conformés et pour cela sont formés sous forme de poudre, de granulés, en particulier cependant sous la forme de bâtonnets d'engrais.

5. Mélanges de substances de valeur selon les revendications 1 à 4, caractérisés en ce qu'ils sont au moins largement stables quant à la forme vis-à-vis de l'entrée de l'air environnant et sont dépourvus d'adhésivité et libèrent au contact de la terre et en particulier par inclusion dans le pied des plantes les substances de valeur actives sur les plantes, mais cependant de préférence tout en dégradant simultanément l'amidon.

6. Mélanges de substances de valeur selon les revendications 1 à 5, caractérisés en ce qu'ils ont été préparés par mélange des ingrédients et thermoplastification des amidons hydratés tout en ajoutant de petites quantités d'agents de plastification compatibles biologiquement, en particulier du glycérol et modelage consécutif.

7. Mélanges de substances de valeur selon les revendications 1 à 6, caractérisés en ce qu'ils sont formés sous forme de bâtonnets d'engrais pour le domaine de la maison et du jardin, mais aussi pour le jardin maraîcher, et pour cela possèdent de préférence un diamètre dans la zone d'environ 2 à 20 mm et une longueur dans la zone d'environ 20 à 200 mm.

8. Mélanges de substances de valeur selon les revendications 1 à 7, caractérisés en ce qu'ils possèdent dans l'arrangement sous forme de bâtonnets d'engrais des résistances à la flexion relativement élevées qui se situent par exemple à au moins 3000 N/cm², alors que dans le domaine des poudres et/ou des granulés des résistances aussi plus basses peuvent être fournies.

9. Procédé d'obtention des mélanges de substances de valeur conformés pour favoriser la croissance des plantes selon les revendications 1 à 8, caractérisé en ce que l'on mélange de l'amidon natif avec des substances de valeur actives sur les plantes et le cas échéant avec des charges, si désiré des quantités supplémentaires d'eau, ainsi qu'avec les agents de plastification à bas poids moléculaire, en ce que l'on soumet le mélange de plusieurs substances à des températures et à des pressions élevées avec mélange et/ou malaxage intensif simultané, à la désintégration, avec formation de l'amidon, façonné thermoplastiquement et si désiré on façonne le mélange de substances homogénéisé par modelage.

10. Procédé selon la revendication 9, caractérisé en ce que l'on effectue le processus de mélange et la désintégration de l'amidon dans des malaxeurs fermés ou de préférence dans des extrudeurs, et pour cela on met en accord l'un avec l'autre, la durée de séjour et les conditions de façonnage de sorte qu'aussi bien la désintégration thermomécanique de l'amidon qu'une incorporation par mélange homogène des substances de valeur et le cas échéant de charges, sont assurées.

11. Procédé selon les revendications 9 et 10 caractérisé en ce que l'on opère avec des températures de produit au-dessus de 90°C et de préférence dans la plage d'environ 95 à 120°C, au moins dans les phases finales du procédé de mélange et de désintégration de l'amidon.

12. Procédé selon les revendications 9 à 11, caractérisé en ce que l'on opère avec des temps de séjour du mélange de plusieurs substances dans des conditions opératoires dans la zone allant jusqu'à 30 minutes, de préférence dans la zone d'environ 0,5 à 10 minutes et pour cela en particulier dans une procédé en continu, et sous la pression intrinsèque qui s'ajuste dans le système par la température du procédé.

13. Procédé selon les revendications 9 à 12, caractérisé en ce que le mélange et la désintégration de l'amidon sont effectués dans des extrudeurs chauffés auxquels sont amenés l'amidon, de préférence sous forme d'amidon en poudre avec la teneur en eau naturelle, et les substances de valeur ou de charge sous forme de matières solides séparées ou aussi en mélange, alors que les agents de plastification à bas poids moléculaire et/ou les quantités d'eau supplémentaire sont fournis sous forme de courant de substance séparé dans la partie d'entrée et en ce que le mélange de substances homogénéisé et désintégré, si désiré après un entraînement partiel de l'eau en excès est produit sous forme d'extrudat.

14. Procédé selon les revendications 9 à 13, caractérisé en ce que l'on ajuste la résistance et/ou la fragilité du produit de séchage par les quantités d'amidon mises en jeu et/ou d'agent de plastification utilisé conjointement (eau et/ou agent de plastification organique).

15. Procédé selon les revendications 9 à 14, caractérisé en ce que les agents de plastification à bas poids moléculaire, sont mis en jeu en quantités d'environ 5 à 30 % en poids, de préférence en quantités d'environ 15 à 30 % en poids, les % en poids rapportés à l'amidon hydraté, dans lequel en outre de préférence la teneur totale en eau et en agent de plastification est choisie dans la zone d'environ 25 à 55 % en poids, de préférence d'environ 35 à 50 % en poids, les % en poids rapportés à la somme de l'amidon, de l'eau et de l'agent de plastification à bas poids moléculaire.

16. Utilisation d'amidon désintégré thermomécaniquement en quantités d'environ 10 à 40 % en poids, le cas échéant en mélange avec des quantités inférieures d'autres constituants d'agent liant compatibles biologiquement sous forme d'agent liant dégradable biologiquement pour des mélanges de substances de valeur pour favoriser et entretenir la croissance des plantes.
